# EUROPÄISCHE PATENTSCHRIFT

(11) **EP 2 715 200 B1**
(45) Veröffentlichungstag und Bekanntmachung des Hinweises auf die Patenterteilung: **02.11.2016**
(21) Anmeldenummer: 12724982.9
(22) Anmeldetag: 30.05.2012
(51) Int. Cl.: F16L 13/00, F16L 19/00, F16L 19/02, F16L 37/088

(54) **SPIELFREIE STECKVERBINDUNG FÜR ROHR- ODER SCHLAUCHLEITUNGEN**
PLAY-FREE PLUG CONNECTION FOR PIPE OR TUBE LINES
RACCORD ENFICHABLE SANS JEU POUR TUBES OU TUYAUX FLEXIBLES

(30) Priorität: 31.05.2011 DE 102011050778
(43) Veröffentlichungstag der Anmeldung: 09.04.2014
(73) Patentinhaber: Parker Hannifin GmbH, 33659 Bielefeld (DE)
(72) Erfinder: EHRKE, Dieter, 33659 Bielefeld (DE)
(74) Vertreter: Müller, Karl-Ernst
(86) Internationale Anmeldenummer: PCT/EP2012/060115
(87) Internationale Veröffentlichungsnummer: WO 2012/163951

(56) Entgegenhaltungen:
- EP-A1- 2 233 814
- DE-B3-102004 035 354
- DE-U1- 29 622 775
- US-A- 4 063 760
- US-A- 5 226 682

## Beschreibung

Die Erfindung betrifft eine Steckverbindung für Rohr- oder Schlauchleitunggen mit einem eine Bohrung zur Durchleitung eines die Rohr- oder Schlauchleitung durchströmenden Mediums aufweisenden Verschraubungskörper und mit einer auf den Verschraubungskörper aufgeschraubten, zur verriegelnden Aufnahme eines in den Verschraubungskörper eingesteckten Rohrstückes mittels eines sich an einer an dem Rohrstück angeordneten Verriegelungsfläche abstützenden, in einer Kammer der Überwurfmutter angeordneten Sicherungsringes eingerichteten Überwurfmutter, wobei in einer dem Sicherungsring zugeordneten Bodenfläche der Kammer eine gestufte Ausnehmung zur Aufnahme des Sicherungsringes ausgebildet ist bestehend aus einer der Kammer benachbarten und der Aufnahme des Sicherungsringes beim Einstecken des Rohrstückes eingerichteten ersten Stufe und einer daran anschließenden und den Sicherungsring in einer verriegelnden Anlage an der Verriegelungsfläche des eingesteckten Rohrstückes festlegenden zweiten Stufe.

Eine Steckverbindung mit den vorgenannten Merkmalen ist in der DE 10 2004 035 354 B3 beschrieben. Diese bekannte Steckverbindung beruht auf dem Verriegelungsprinzip, dass einerseits in einer in der auf dem mit einem ersten Rohr verbundenen oder einen Bestandteil davon bildenden Verschraubungskörper fest aufgeschraubten Überwurfmutter ausgebildeten Kammer ein federnd aufweitbarer Sicherungsring angeordnet ist und dass andererseits ein Rohrstück in Form eines zweiten Rohres mit einer daran durch Verformung seiner Rohrwandung ausgebildeten Wulst in die Kammer der Überwurfmutter bzw. den daran anschließenden Verschraubungskörper einsteckbar und darin mittels des Sicherungsringes verriegelbar ist. Beim Einstecken des Rohrstückes weitet die Wulst den federnd ausgebildeten Sicherungsring auf, bis dieser bei Erreichen der Verbindungsstellung von Verschraubungskörper und Rohrstück hinter die durch die Wulst gebildete Verriegelungsfläche schnappt. Um diese radiale Bewegung des Sicherungsringes zu ermöglichen, ist in der dem Sicherungsring zugeordneten Bodenfläche der Kammer eine gestufte Ausnehmung zur Aufnahme des Sicherungsringes ausgebildet, die aus einer der Kammer benachbarten und zur Aufnahme des Sicherungsringes beim Einstecken des Rohrstückes eingerichteten ersten Stufe und einer daran anschließenden und den Sicherungring in einer verriegelnde Anlage an dem eingesteckten Rohrstück festlegenden zweiten Stufe besteht. Aufgrund der Zuordnung dieser beiden Stufen der Ausnehmung ist bei der bekannten Steckverbindung eine Drehung der Überwurfmutter auf dem Verschraubungskörper bei eingestecktem Rohrstück nicht vorgesehen.

Mit einer derartigen Steckverbindung ist noch der Nachteil verbunden, dass in der zunächst unbelasteten Einsteckstellung des Rohrstückes in dem Verschraubungskörper der Sicherungsring gegen die Übergangsecke zwischen der ersten Ausnehmungsstufe und der zweiten Ausnehmungsstufe anliegt.

Erst bei einer unter Druck stehenden Steckverbindung oder einer darauf ausgeübten Zugbelastung wird der Sicherungsring vollständig in die zweite Ausnehmungsstufe hineingezogen und darin durch die Lage der Überwurfmutter auf dem Verschraubungskörper festgelegt. Daraus folgt, dass bei druckloser Steckverbindung ein gewisses axiales Spiel des Rohrstückes mit Verriegelungsfläche gegenüber dem Verschraubungskörper mit Überwurfmutter vorhanden ist. Dieses axiale Spiel führt bei einer dynamischen Druckbeanspruchung oder bei auf die Steckverbindung einwirkenden Vibrationen zu entsprechenden Axialbewegungen der Bauteile gegeneinander und damit zu einem Verschleiß und in der Folge zu einer geringeren Lebensdauer der Steckverbindung.

Der Erfindung liegt daher die Aufgabe zugrunde, eine Steckverbindung mit den gattungsgemäßen Merkmalen so weiterzubilden, dass auch bei druckloser Steck- bzw. Rohrverbindung oder bei dynamischer Druckbeaufschlagung sowie bei einwirkenden Vibrationen eine Relativbewegung der Bauteile der Steckverbindung gegeneinander vermieden ist.

Die Lösung dieser Aufgabe ergibt sich einschließlich vorteilhafter Ausgestaltungen und Weiterbildungen der Erfindung aus dem Inhalt der Patentensprüche, welche dieser Beschreibung nachgestellt sind.

Die Erfindung sieht in ihrem Grundgedanken vor, dass die auf dem Verschraubungskörper aufgeschraubte Überwurfmutter mittels eines zwischen dem Verschraubungskörper und der Überwurfmutter angeordneten federnd aufweitbaren Sprengringes unverlierbar an dem Verschraubungskörper gehaltert und die Überwurfmutter aufgrund des jeweils in an Verschraubungskörper und Überwurfmutter ausgebildeten Nuten eingreifenden Sprengringes zwischen einer Einsteckstellung und einer Verriegelungsstellung für den Sicherungsring verdrehbar angeordnet ist und ferner an dem Verschraubungskörper ein Anschlag für die in die Verriegelungsstellung verdrehte Überwurfmutter angeordnet ist, wobei in der Einsteckstellung der Überwurfmutter der Sicherungsring in der ersten Stufe der in der Überwurfmutter ausgebildeten Ausnehmung liegt und in der Verriegelungsstellung der Überwurfmutter die zweite Stufe der Ausnehmung den Sicherungsring übergreift und den Sicherungsring in der verriegelnden Anlage an der Verriegelungsfläche des eingesteckten Rohrstückes festlegt.

Mit der Erfindung ist der Vorteil verbunden, dass das bei der gattungsgemäßen Steckverbindung zwangsläufig vorhandene axiale Spiel durch die zusätzlich eingerichtete Verdrehung der Überwurfmutter von ihrer Einsteckstellung in ihre Verriegelungsstellung beseitigt wird, weil durch die mit der Verdrehung der Überwurfmutter verbundene axiale Verschiebung der Überwurfmutter auf dem Verschraubungskörper die zweite Stufe der mit dem Sicherungsring zusammenwirkenden Ausnehmung der Überwurfmutter in unmittelbaren Kontakt mit dem Sicherungsring gebracht wird und diesen axial in seiner verriegelnden Anlage gegen die Verriegelungsfläche des eingesteckten Rohrstückes vorspannt bzw. dagegen festlegt. Dabei ist die Überwurfmutter in ihrer auf dem Verschraubungskörper aufgeschraubten Montagestellung einerseits durch den zwischen dem Verschraubungskörper und der Überwurfmutter angeordneten Sprengring unverlierbar an dem Verschraubungskörper gehalten. Andererseits ist aufgrund der Anordnung von den Sprengring jeweils aufnehmenden Nuten sowohl in der Überwurfmutter als auch im Verschraubungskörper sowie aufgrund der Anordnung des Anschlages am Verschraubungskörper dafür Sorge getragen, dass die Verdrehung der Überwurfmutter zwischen der das Einstecken des Rohrstückes ermöglichenden Einsteckstellung und der Verriegelungsstellung für den Sicherungsring in beiden axialen Bewegungsrichtungen der Überwurfmutter definiert bzw. begrenzt ist.

Nach einem Ausführungsbeispiel der Erfindung ist vorgesehen, dass der Anschlag für die Überwurfmutter an dem Verschraubungskörper der Stirnseite der Überwurfmutter gegenüberliegend angeordnet und zwischen Anschlag und Überwurfmutter ein in deren Einsteckstellung wirksamer Spalt ausgebildet ist, der bei in die Verriegelungsstellung verdrehter Überwurfmutter geschlossen ist. Soweit der vorgesehene Spalt in der Einsteckstellung der Überwurfmutter sichtbar ist, ist sichergestellt, dass von außen erkennbar ist, ob bzw. dass sich die Überwurfmutter in der Verriegelungsstellung befindet. Dabei kann in einer an sich bekannten Weise ergänzend vorgesehen sein, dass die äußere Umfangsfläche des Verschraubungskörpers in diesem Bereich farbig angelegt ist, so dass das Bestehen eines Spaltes besser erkennbar ist.

Nach einem Ausführungsbeispiel der Erfindung ist vorgesehen, dass eine in der Überwurfmutter ausgebildete und zur Aufnahme des zwischen Verschraubungskörper und Überwurfmutter angeordneten Sprengringes eingerichtete Nut eine einen Seildurchmesser des Sprengringes entsprechende Tiefe aufweist derart, dass der in der Nut liegende Sprengring mit einem Teil seines Umfangs über die auf dem Verschraubungskörper liegende Fläche der Überwurfmutter hervorsteht. Somit liegt der federnd aufweitbare Sprengring in der an der Überwurfmutter ausgebildeten Nut fest und bewegt sich jeweils gemeinsam mit der axialen Bewegung der Überwurfmutter über die Umfangsfläche des Verschraubungskörpers. Im Rahmen dieser Bewegung wirkt der über die auf dem Verschraubungskörper liegende Fläche der Überwurfmutter hervorstehende Bereich des Sprengringes mit am Verschraubungskörper ausgebildeten Nuten zusammen.

Dabei ist nach einem Ausführungsbeispiel der Erfindung vorgesehen, dass eine in dem Verschraubungskörper ausgebildete und zur Aufnahme des zwischen Verschraubungskörper und Überwurfmutter angeordneten Sprengringes eingerichtete erste Nut eine derartige Tiefe aufweist, dass der Sprengring vollständig in die Nut einsenkbar ist. Diese Maßnahme ist dazu vorgesehen, die Montage der Überwurfmutter auf dem Verschraubungskörper zu ermöglichen.

Darüber hinaus kann vorgesehen sein, dass an die im Verschraubungskörper ausgebildete erste Nut auf deren dem Anschlag abgewandter Seite eine zweite Nut anschließt, deren Abmessung dem über die auf dem Verschraubungskörper liegende Fläche der Überwurfmutter hervorstehenden Bereich des Sprengringes entspricht derart, dass in der Einsteckstellung der Überwurfmutter der in der Nut der Überwurfmutter liegende Sprengring von der zweiten Nut des Verschraubungskörpers aufgenommen ist. Hiermit ist sichergestellt, dass die Überwurfmutter aus ihrer durch den Anschlag am Verschraubungskörper definierten Verriegelungsstellung axial nicht weiter als bis in ihre Einsteckstellung losgedreht werden kann, weil in dieser Bewegungsrichtung der axiale Weg des an der Überwurfmutter fixierten Sprengringes durch die zweite Nut im Verschraubungskörper begrenzt ist.

Im Rahmen der erfindungsgemäßen Ausgestaltung der Steckverbindung kann zunächst in einer aus der gattungsbildenden DE 10 2004 035 354 B3 bekannten Weise vorgesehen sein, dass der Sicherungsring ein federnd aufweitbarer Sicherungsring mit einem auf den Außendurchmesser des einzusteckenden Rohrstückes abgestimmten Innendurchmesser ist, der durch einen die Verriegelungsfläche tragenden Bereich des Rohrstückes aufweistbar ist. Eine solche Steckverbindung ist nicht oder nur im Rahmen einer weitergehenden besonderen Ausgestaltung der Steckverbindung und eines Einsatzes eines speziellen Werkzeuges lösbar.

Die erfindungsgemäße Steckverbindung schafft demgegenüber zusätzlich die Möglichkeit, eine derartige Steckverbindung auch in einfacher Weise lösbar einzurichten. Hierzu kann nach einem Ausführungsbeispiel der Derfindung vorgesehen sein, dass der Sicherungsring ein federnd zusammendrückbarer Sicherungsring mit einem Innendurchmesser ist, der in der Einsteckstellung der Überwurfmutter ein Einstecken des Rohrstückes einschließlich der daran ausgebildeten Verriegelungsfläche ermöglicht und der durch die Verdrehung der Überwurfmutter in deren Verriegelungsstellung in Eingriff mit der an dem Rohrstück ausgebildeten Verriegelungsfläche gebracht ist. Wenn somit der Sicherungsring so ausgestaltet ist, dass er in seinem ungespannten Zustand einen größeren Durchmesser aufweist als das einzusteckende Rohrstück, so kann dieses Rohrstück in die Überwurfmutter mit Verschraubungskörper eingesteckt und wieder herausgezogen werden, ohne dass eine Arretierung durch den Sicherungsring stattfindet. Erst soweit nach dem Einstecken des Rohrstückes die Überwurfmutter aus ihrer Einsteckstellung in ihre Verriegelungsstellung verdreht wird, wird hierdurch der Sicherungsring nunmehr zusammengedrückt und in Anlage an der Verriegelungsfläche des Rohrstückes gedrückt und legt das zweite Rohr fest. Damit ist auch diese Ausbildung der Steckverbindung spielfrei. Durch Verdrehung der Überwurfmutter von der Verriegelungsstellung in die Einsteckstellung wird die erste Stufe der in der Überwurfmutter ausgebildeten Ausnehmung zur Aufnahme des Sicherungsringes wieder freigegeben, sodass sich der Sicherungsring aus seiner zusammengedrückten Stellung in seine Ausgangsstellung ausdehnen kann. In dieser Ausgangsstellung kann das Rohrstück aus dem Verschraubungskörper mit Überwurfmutter herausgezogen werden.

In der Zeichnung sind Ausführungsbeispiele der Erfindung wiedergegeben, welche nachstehend beschrieben sind. Es zeigen:
- Fig. 1: einen Verschraubungskörper und darauf montierte Überwurfmutter einerseits und ein entsprechend umgeformtes Rohrende eines einzusteckenden Rohrstückes andererseits vor dem Herstellen der Steckverbindung,
- Fig. 2: den Gegenstand der Figur 1 nach dem Herstellen der Steckverbindung bei noch in ihrer Einsteckstellung befindlicher Überwurfmutter,
- Fig. 3: den Gegenstand gemäß Figur 2 bei in die Verriegelungsstellung verdrehter Überwurfmutter,
- Fig. 4: eine andere Ausführungsform der Steckverbindung mit einer lösbaren Verriegelung bei in der Einsteckstellung stehender Überwurfmutter,
- Fig. 4a: die Einzelheit "X" aus Fig. 4 in einer vergrößerten Darstellung,
- Fig. 5: das Ausführungsbeispiel gemäß Figur 4 mit in die Verriegelungsstellung verdrehter Überwurfmutter,
- Fig. 5a: die Einzelheit "X" aus Fig. 5 in einer vergrößerten Darstellung.

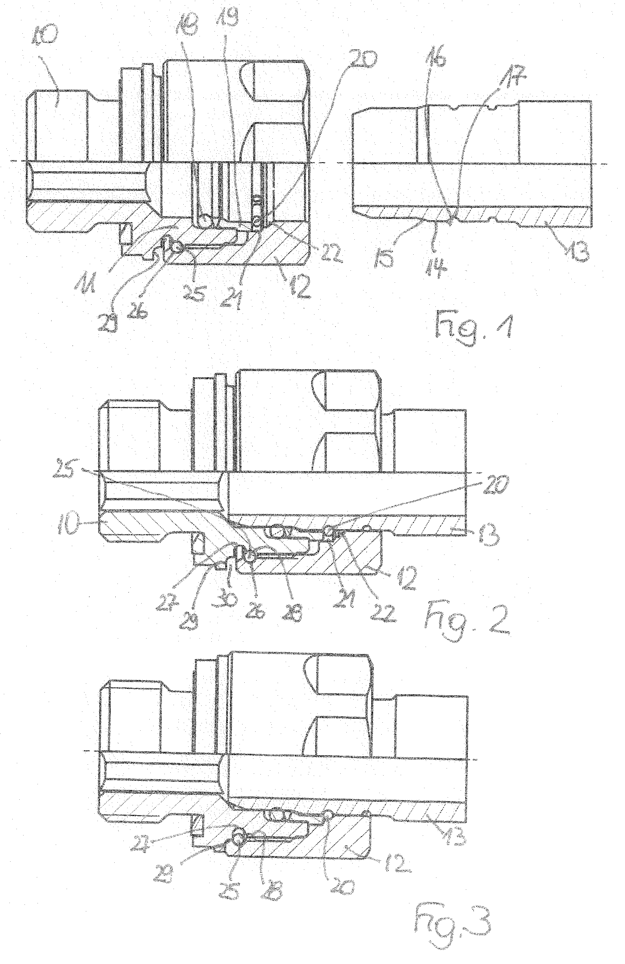

Die zunächst in Figur 1 dargestellte Steckverbindung besteht aus einem Verschraubungskörper 10, auf dessen mit einem entsprechenden Außengewinde versehenen Schraubstutzen 11 eine Überwurfmutter 12 mit entsprechendem Innengewinde aufgeschraubt ist. In den insoweit vormontiertten Verschraubungskörper 10 mit darauf geschraubter Überwurfmutter 12 ist ein Rohrstück 13 einsteckbar, in dessen Einsteckbereich eine über den äußeren Umfang des Einsteckbereichs überstehende Wulst 14 mit einer in Einsteckrichtung vorderen Aufweitfläche 15 und einer gegenüberliegenden hinteren Verriegelungsfläche 16 ausgebildet ist, wobei die Verriegelungfläche 16 von einer Verriegelungsnut 17 gebildet ist. Zur Verriegelung des Rohrstückes 13 in dem Verschraubungskörper 10 mit Überwurfmutter 12 ist in der Überwurfmutter ein bei dem dargestellten Ausführungsbeispiel federnd aufweitbarer Sicherungsring 20 festgelegt. Ferner ist in der entsprechenden Aufnahme des Verschraubungskörpers 10 für das Einsteckende des Rohrstückes 13 ein Dichtungsring 18 sowie ein Distanzstück 19 angeordnet, welche beiden Teile mit dem Einsteckende des Rohrstückes 13 dichtend zusammenwirken, wobei das Distanzstück 19 mit seinem hinteren Ende auch den Sicherungsring 20 abstützt. In der Überwurfmutter 12 ist eine zweistufige Ausnehmung zur Aufnahme des Sicherungsringes 20 in einer Einsteckstellung der Überwurfmutter 12 für das Rohrstück 13 und in einer Verriegelungsstellung der Überwurfmutter 12 angeordnet mit einer ersten Stufe 21 und einer zweiten Stufe 22, deren Funktion noch beschrieben ist.

Im Bereich des Schraubstutzens 11 und der darauf aufgeschraubten Überwurfmutter 12 ist zwischen der Überwurfmutter 11 und dem Verschraubungskörper 10 ein Sprengring 25 angeordnet, der mit einem Teilbereich seines Querschnitts in einer in der Überwurfmutter ausgebildeten Nut 26 festliegt, so dass sich der Sprengring 25 mit seinem über die auf dem Schraubstutzen 11 des Verschraubungskörpers 10 aufliegende Fläche der Überwurfmutter 12 überstehenden Bereich bei den bei einer Drehung der Überwurfmutter sich vollziehenden Axialbewegung jeweils verschiebt gemeinsam mit der Überwurfmutter verschiebt.

An dem Verschraubungskörper 10 ist eine erste Nut 27 zur Aufnahme des Sprengringes 25 ausgebildet, deren Tiefe derartig bemessen ist, dass der Sprengring 25 vollständig in die Nut 27 einsenkbar ist. An diese erste Nut 27 schließ in der Bewegungsrichtung der Überwurfmutter 12 von ihrer Verriegelungsstellung (Figur 3) in ihre Aufnahmestellung (Figur 2) eine zweite Nut 28 an, deren Abmessung dem über die auf dem Verschraubungskörper 10 liegenden Fläche der Überwurfmutter 12 hervorstehenden Bereich des Sprengringes 25 entspricht.

Schließlich ist der Stirnseite der Überwurfmutter 12 gegenüberliegend au dem Verschraubungskörper 10 ein Anschlag 29 für die Überwurfmutter 12 angeordnet, der die Verdrehung der Überwurfmutter 12 von deren Einsteckstellung (Figur 2) in deren Verriegelungsstellung (Figur 3) begrenzt. Der Anschlag 29 ist dabei mit einem solchen Abstand von der zweiten Nut 28 des Verschraubungskörpers 10 angeordnet, dass dieser Abstand dem axialen Weg der Überwurfmutter 12 zwischen ihrer Einsteckstellung (Figur 2) und ihrer Verriegelungsstellung (Figur 3) entspricht.

Bei der Montage der aus Verschraubungskörper 10 und Überwurfmutter 12 bestehenden Baueinheit wird zunächst der Sprengring 25 auf den Schraubstutzen 11 des Verschraubungskörpers 10 aufgeschoben. Soweit anschließend die Überwurfmutter 12 auf den Schraubstutzen 11 aufgeschraubte wird, schiebt die Überwurfmutter 12 mit ihrer Stirnseite den Sprengring 25 auf dem Schraubstutzen 11 axial vor sich her, bis der Sprengring 25 die erste Nut 27 des Verschraubungskörpers 10 erreicht. Bei einer weiteren Axialverschiebung der Überwurfmutter 12 drückt die Überwurfmutter 12 den Sprengring 25 vollständig in die erste Nut 27 hinein, bis die an der Innenseite der Überwurfmutter 12 angeordnete Nut 26 über dem Sprengring 25 zu Liegen kommt, so dass der federnd aufweitbar ausgebildete Sprengring selbsttätig in die Nut 26 der Überwurfmutter 12 einschnappt und anschließend hierin festgelegt ist. Nunmehr kann die Überwurfmutter 12 weiter verdreht werden, bis ihre Stirnseite an dem Anschlag 29 des Verschraubungskörpers 10 zu Liegen kommt. Diese Stellung der Überwurfmutter entspricht deren Verriegelungsstellung, wie noch zu beschreiben sein wird. Wird die Überwurfmutter losgedreht, so wird der axiale Verschiebeweg des in der Nut 26 der Überwurfmutter 12 fixierten Sprengringes 25 durch die zweite Nut 28 im Verschraubungskörper 10 begrenzt, so dass über die aus Figur 2 ersichtliche und ihrer Einsteckstellung entsprechende Schraubstellung der Überwurfmutter 12 die Überwurfmutter 12 nicht weiter von dem Schraubstutzen 11 abdrehbar ist. Insofern weist der Sprengring 25 eine Doppelfunktion auf, indem er einerseits den Schraubweg der Überwurfmutter 12 auf dem Verschraubungskörper 10 definiert und begrenzt und andererseits ein vollständiges Abschrauben der Überwurfmutter 12 von dem Schraubstutzen 11 verhindert.

Zur Montage der Rohr-Steckverbindung wird die Überwurfmutter 12 in ihre aus Figur 2 ersichtliche Einsteckstellung gedreht, in welcher die im Inneren der Überwurfmutter 12 ausgebildete erste Stufe 21 über dem in der Überwurfmutter 12 fixierten, federnd aufweitbaren Sicherungsring 20 liegt. In dieser Stellung wird das einzusteckende Rohrstück 13 in die aus Verschraubungskörper 10 und Überwurfmutter 12 bestehende Einheit eingesteckt, wobei die Aufweitfläche 15 der Wulst 14 den Sicherungsring 20 aufweitet, der dabei in die erste Ausnehmungsstufe 21 der Überwurfmutter 12 eintritt. Nach Passieren des Wulstes 14 schnappt der Sicherungsring 20 selbsttätig hinter die Verriegelungsfläche 16 der Wulst 14 und rastet dabei in die an dem Rohrstück 13 ausgebildete Verriegelungsnut 17 ein. Dieser Zustand ist in Figur 2 dargestellt. Soweit in dieser Stellung bereits eine Verriegelung des eingesteckten Rohrstückes 13 mit der aus Verschraubungskörper 10 und Überwurfmutter 12 bestehenden Baueinheit gewährleistet ist, wird nun zur Beseitigung von noch möglichen Axialbewegungen die Überwurfmutter 12 in ihre aus Figur 3 ersichtliche Sicherungsstellung verdreht, in welcher die zweite Ausnehmungsstufe 22 über den Sicherungsring 20 rutscht und diesen nun in die Verriegelungsnut 17 bzw. gegen die Verriegelungsfläche 16 drückt, so dass das eingesteckte Rohrstück 13 über den damit verrasteten Sicherungsring 20 aufgrund der axialen Festlegung des Sicherungsringes 20 nun ebenfalls axial fixiert ist. Damit sind entsprechendde Bewegungen der Bauteile zueinander ausgeschlossen. Diese Verdrehung der Überwurfmutter 12 aus ihrer Einsteckstellung (Figur 2) in ihre Verriegelungsstellung (Figur 3) wird durch den Anschlag 29 am Verschraubungskörper 10 begrenzt.

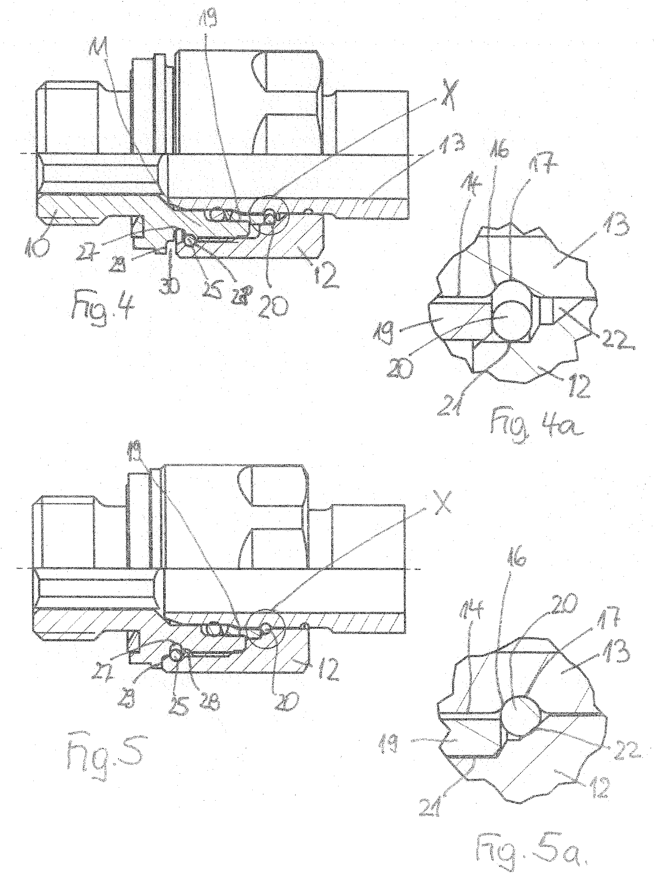

Soweit in Übereinstimmung mit dem gattungsbildenden Stand der Technik die zuvor beschriebene Steckverbindung nicht ohne weiteres lösbar ist, lässt sich in gleicher Weise auch eine lösbare Verbindung einrichten. Hierzu ist entsprechend dem in den Figuren 4 und 5 dargestellten Ausführungsbeispiel der Sicherungsring 20 nicht als ein federnd aufweitbarer Ring ausgebildet, sondern als ein federnd zusammendrückbarer Ring, dessen Innendurchmesser größer bemessen ist als der Durchmesser des einzusteckenden Rohrstückes 13 einschließlich der daran ausgebildeten Wulst 14 mit Verriegelungsfläche 16. In diesem Fall kann das Rohrstück 13 in die aus Verschraubungskörper 10 und Überwurfmutter 12 bestehende Baueinheit eingesteckt und daraus wieder herausgezogen werden, ohne dass es zu einer Verriegelungsfunktion des Sicherungsringes 20 kommt. Dieser Zustand ist in Figuren 4 und 4a dargestellt.

Soll das eingesteckte Rohrstück 13 in der aus Verschraubungskörper 10 und Überwurfmutter 12 bestehenden Baueinheit verriegelt werden, so wird nun entsprechend dem zu Figuren 1 bis 3 beschriebenen Ausführungsbeispiel die Überwurfmutter 12 aus ihrer Einsteckstellung entsprechend Figur 4 in ihre Sicherungsstellung entsprechend Figur 5 verdreht, wobei nun wiederum die zweite Ausnehmungsstufe 22 der Überwurfmutter 12 den Sicherungsring 20 aktiv hinter die Verriegelungsfläche 16 bzw. in die Verriegelungsnut 17 des Rohrstückes 13 drückt und somit die Verriegelung herstellt. Insofern ist bei diesem Ausführungsbeispiel eine Verriegelung der Steckverbindung nur bei in die Verriegelungsstellung verdrehter Überwurfmutter 12 gegeben. Wird die Überwurfmutter 12 aus ihrer Verriegelungsstellung in die Einsteckstellung rückgedreht, so gelangt die erste Ausnehmungsstufe 21 axial über den Sicherungsring 20, so dass sich der in seine Verriegelungsstellung zusammengedrückte Sicherungsring 20 selbsttätig wieder in seine Ausgangsstellung aufweitet, in welcher ein freies Einstecken bzw. Herausziehen des Rohrstückes 13 möglich ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Steckverbindung für Rohr- oder Schlauchleitungen mit einem eine Bohrung zur Durchleitung eines die Rohr- oder Schlauchleitung durchströmenden Mediums aufweisenden Verschraubungskörper (10) und mit einer auf den Verschraubungskörper (10) aufgeschraubten, zur verriegelnden Aufnahme eines in den Verschraubungskörper (10) eingesteckten Rohrstücks (13) mittels eines sich an einer an dem Rohrstück (13) angeordneten Verriegelungsfläche (16) abstützenden, in einer Kammer der Überwurfmutter (12) angeordneten Sicherungsringes (20) eingerichteten Überwurfmutter (12), wobei in einer dem Sicherungsring (20) zugeordneten Bodenfläche der Kammer eine gestufte Ausnehmung zur Aufnahme des Sicherungsringes (20) ausgebildet ist bestehend aus einer der Kammer benachbarten und der Aufnahme des Sicherungsringes (20) beim Einstecken des Rohrstückes (13) eingerichteten ersten Stufe (21) und einer daran anschließenden und den Sicherungsring (20) in einer verriegelnden Anlage an der Verriegelungsfläche (16) des eingesteckten Rohrstückes (13) festlegenden zweiten Stufe (22), **dadurch gekennzeichnet, dass** die auf dem Verschraubungskörper (10) aufgeschraubte Überwurfmutter (12) mittels eines zwischen dem Verschraubungskörper (10) und der Überwurfmutter (12) angeordneten federnd aufweitbaren Sprengringes (25) unverlierbar an dem Verschraubungskörper (10) gehaltert und die Überwurfmutter (12) aufgrund des jeweils in an Verschraubungskörper (10) und Überwurfmutter (12) ausgebildeten Nuten (26, 27, 28) eingreifenden Sprengringes (25) zwischen einer Einsteckstellung und einer Verriegelungsstellung für den Sicherungsring (20) verdrehbar angeordnet ist und ferner an dem Verschraubungskörper (10) ein Anschlag (29) für die in die Verriegelungsstellung verdrehte Überwurfmutter (12) angeordnet ist, wobei in der Einsteckstellung der Überwurfmutter (12) der Sicherungsring (20) in der ersten Stufe (21) der in der Überwurfmutter (12) ausgebildeten Ausnehmung liegt und in der Verriegelungsstellung der Überwurfmutter (12) die zweite Stufe (22) der Ausnehmung den Sicherungsring (20) übergreift und den Sicherungsring (20) in der verriegelnden Anlage an der Verriegelungsfläche (16) des eingesteckten Rohrstückes (13) festlegt.

2. Steckverbindung nach Anspruch 1, **dadurch gekennzeichnet, dass** der Anschlag (29) für die Überwurfmutter (12) an dem Verschraubungskörper (10) der Stirnseite der Überwurfmutter (12) gegenüberliegend angeordnet und zwischen Anschlag (29) und Überwurfmutter (12) ein in deren Einsteckstellung wirksamer Spalt (30) ausgebildet ist, der bei in die Verriegelungsstellung verdrehter Überwurfmutter (12) geschlossen ist.

3. Steckverbindung nach einem der Ansprüche 1 oder 2, **dadurch gekennzeichnet, dass** eine in der Überwurfmutter (12) ausgebildete und zur Aufnahme des zwischen Verschraubungskörper (10) und Überwurfmutter (12) angeordneten Sprengringes (25) eingerichtete Nut (26) eine einen Teildurchmesser des Sprengringes (25) entsprechende Tiefe aufweist derart, dass der in der Nut (26) liegende Sprengring (25) mit einem Teil seines Umfangs über die auf dem Verschraubungskörper (10) liegende Fläche der Überwurfmutter (12) hervorsteht.

4. Steckverbindung nach einem der Ansprüche 1 bis 3, **dadurch gekennzeichnet, dass** eine in dem Verschraubungskörper (10) ausgebildete und zur Aufnahme des zwischen Verschraubungskörper (10) und Überwurfmutter (12) angeordneten Sprengringes (25) eingerichtete erste Nut (27) eine derartige Tiefe aufweist, dass der Sprengring (25) vollständig in die Nut (27) einsenkbar ist.

5. Steckverbindung nach Anspruch 3 und 4, **dadurch gekennzeichnet, dass** an die im Verschraubungskörper (10) ausgebildete erste Nut (27) auf deren dem Anschlag (29) abgewandter Seite eine zweite Nut (28) anschließt, deren Abmessung dem über die auf dem Verschraubungskörper (10) liegende Fläche der Überwurfmutter (12) hervorstehenden Bereich des Sprengringes (25) entspricht derart, dass in der Einsteckstellung der Überwurfmutter (12) der in der Nut (26) der Überwurfmutter (12) liegende Sprengring (25) von der zweiten Nut (28) des Verschraubungskörpers (10) aufgenommen ist.

6. Steckverbindung nach einem der Ansprüche 1 bis 5, **dadurch gekennzeichnet, dass** der Sicherungsring (20) ein federnd aufweitbarer Sicherungsring mit einem auf den Außendurchmesser des Rohrstückes (13) abgestimmten Innendurchmesser ist, der durch einen die Verriegelungsfläche (16) tragenden Bereich des Rohrstückes (13) aufweitbar ist.

7. Steckverbindung nach einem der Ansprüche 1 bis 5, **dadurch gekennzeichnet, dass** der Sicherungsring (20) ein federnd zusammendrückbarer Sicherungsring mit einem Innendurchmesser ist, der in der Einsteckstellung der Überwurfmutter (12) ein Einstecken des Rohrstückes (13) einschließlich der daran ausgebildeten Verriegelungsfläche (16) ermöglicht und der durch die Verdrehung der Überwurfmutter (12) in deren Verriegelungsstellung in Eingriff mit der an dem Rohrstück (13) ausgebildeten Verriegelungsfläche (16) gebracht ist.

## Claims

1. A plug connection for pipe or hose assemblies with a threaded body (10) exhibiting a borehole for conducting a medium flowing through the pipe or hose assembly, and with a union nut (12) screwed onto the threaded body (10) for the locked retention of a pipe section (13) inserted into the threaded body (10) by means of a circlip (20) that is supported against a locking surface (16) arranged on the pipe section (13), and is located in a chamber of the union nut (12), wherein a floor surface of the chamber allocated to the circlip (20) incorporates a stepped recess for holding the circlip (20), comprised of a first stage (21) situated adjacent to the chamber and set up to accommodate the circlip (20) during insertion of the pipe section (13), and a second stage (22) adjoining the latter that secures the circlip (20) so that it abuts in a locking manner against the locking surface (16) of the inserted pipe section (13), **characterized in that** the union nut (12) screwed onto the threaded body (10) is retained on the threaded body (10) secured against loss by means of a resiliently expandable snap ring (25) arranged between the threaded body (10) and union nut (12), and the union nut (12) is arranged so that it can be twisted between an insertion position and locking position for the circlip (20) due to the respective snap ring (25) that engages into grooves (26, 27, 28) formed on the threaded body (10) and union nut (12), and further that a stop (29) for the union nut (12) twisted into the locking position is situated on the threaded body (10), wherein the circlip (20) lies in the first stage (21) of the recess formed in the union nut (12) in the insertion position of the union nut (12), while in the locking position of the union nut (12), the second stage (22) of the recess overlaps the circlip (20) and fixes the circlip (20) in place so that it abuts the locking surface (16) of the inserted pipe section (13) in a locking manner.

2. The plug connection according to claim 1, **characterized in that** the stop (29) for the union nut (12) is situated on the threaded body (10) opposite the end face of the union nut (12), and that a gap (30) that acts in its insertion position is formed between the stop (29) and union nut (12), and is closed with the union nut (12) twisted into the locking position.

3. The plug connection according to one of claims 1 or 2, **characterized in that** a groove (26) formed in the union nut (12) and set up to receive the snap ring (25) located between the threaded body (10) and union nut (12) exhibits a depth corresponding to a partial diameter of the snap ring (25), such that the snap ring (25) lying in the groove (26) protrudes with a portion of its circumference over the surface of the union nut (12) lying on the threaded body (10).

4. The plug connection according to one of claims 1 to 3, **characterized in that** a first groove (27) formed in the threaded body (10) and set up to receive the snap ring (25) located between the threaded body (10) and union nut (12) exhibits a depth that allows the snap ring (25) to completely sink into the groove (27).

5. The plug connection according to claim 3 and 4, **characterized in that** the first groove (27) formed on the threaded body (10) is adjoined on its side facing away from the stop (29) by a second groove (28), whose dimensions correspond to the area of the snap ring (25) protruding over the surface of the union nut (12) lying on the threaded body (10), such that, in the insertion position of the union nut (12), the snap ring (25) lying in the groove (26) of the union nut (12) is accommodated by the second groove (28) of the threaded body (10).

6. The plug connection according to one of claims 1 to 5, **characterized in that** the circlip (20) is a resiliently expandable circlip with an inner diameter that is tailored to the outer diameter of the pipe section (13), and can be expanded by an area of the pipe section (13) that carries the locking surface (16).

7. The plug connection according to one of claims 1 to 5, **characterized in that** the circlip (20) is a resiliently compressible circlip with an inner diameter which, in the insertion position of the union nut (12), permits the insertion of the pipe section (13), including the locking surface (16) formed therein, and which is made to engage with the locking surface (16) formed on the pipe section (13) by twisting the union nut (12) into its locking position.

## Revendications

1. Raccord enfichable pour tubes ou tuyaux flexibles avec un corps de vissage (10) comportant un trou pour faire passer un milieu s'écoulant à travers le tube ou tuyau flexible et avec un écrou de raccordement (12) vissé sur le corps de vissage (10), conçu pour loger un élément tubulaire (13) enfiché dans le corps de vissage (10) tout en le bloquant au moyen d'une bague de sûreté (20) s'appuyant sur une surface de blocage (16) disposée sur l'élément tubulaire (13), disposée dans une chambre de l'écrou de raccordement (12), un évidement étagé pour loger la bague de sûreté (20) étant constitué dans une surface de fond de la chambre attribuée à la bague de sûreté (20), se composant d'un premier gradin (21) voisin de la chambre et conçu pour loger la bague de sûreté (20) lors de l'enfichage de l'élément tubulaire (13) et d'un deuxième gradin (22) venant à la suite et fixant la bague de sûreté (20) dans une disposition de blocage à la surface de blocage (16) de l'élément tubulaire (13) enfiché, **caractérisé en ce que** l'écrou de raccordement (12) vissé sur le corps de vissage (10) est maintenu imperdable sur le corps de vissage (10) au moyen d'un circlip (25) à élargissement élastique disposé entre le corps de vissage (10) et l'écrou de raccordement (12) et l'écrou de raccordement (12) est disposé de manière à pouvoir tourner entre une position d'enfichage et une position de blocage pour la bague de sûreté (20) en raison du circlip (25) venant respectivement en prise dans les rainures (26, 27, 28) ménagées sur le corps de vissage (10) et l'écrou de raccordement (12) et une butée (29) est en outre disposée sur le corps de vissage (10) pour l'écrou de raccordement (12) tourné dans la position de blocage, la bague de sûreté (20) se trouvant dans le premier gradin (21) de l'évidement ménagé dans l'écrou de raccordement (12) dans la position d'enfichage de l'écrou de raccordement (12) et le deuxième gradin (22) de l'évidement venant en prise sur la bague de sûreté (20) dans la position de blocage de l'écrou de raccordement (12) et fixant la bague de sûreté (20) dans la disposition de blocage sur la surface de blocage (16) de l'élément tubulaire (13) enfiché.

2. Raccord enfichable selon la revendication (1), **caractérisé en ce que** la butée (29) pour l'écrou de raccordement (12) est disposée sur le corps de vissage (10) opposée à la face avant de l'écrou de raccordement (12) et entre la butée (29) et l'écrou de raccordement (12) dans la position d'enfichage de celui-ci, un interstice (30) actif est constitué, qui est fermé dans la position de blocage de l'écrou de raccordement (12) tourné.

3. Raccord enfichable selon l'une quelconque des revendications 1 ou 2, **caractérisé en ce qu'**une rainure (26) constituée dans l'écrou de raccordement (12) et conçue pour loger le circlip (25) disposé entre le corps de vissage (10) et l'écrou de raccordement (12) présente une profondeur correspondant à une partie de diamètre du circlip (25) de telle manière que le circlip (25) se trouvant dans la rainure (26) ressort avec une partie de sa périphérie sur la surface de l'écrou de raccordement (12) se trouvant sur le corps de vissage (10).

4. Raccord enfichable selon l'une quelconque des revendications 1 à 3, **caractérisé en ce qu'**une première rainure (27) constituée dans le corps de vissage (10) et conçue pour loger le circlip (25) disposé entre le corps de vissage (10) et l'écrou de raccordement (12) présente une profondeur de telle manière que le circlip (25) peut être enclavé complètement dans la rainure (27).

5. Raccord enfichable selon la revendication 3 et 4, **caractérisé en ce qu'**une deuxième rainure (28) se raccorde à la première rainure (27) constituée dans le corps de vissage (10) sur le côté de celui-ci opposé à la butée (29), dont la dimension correspond à la zone du circlip (25) ressortant sur la surface de l'écrou de raccordement (12) située sur le corps de vissage (10) de telle manière que dans la position d'enfichage de l'écrou de raccordement (12), le circlip (25) situé dans la rainure (26) de l'écrou de raccordement (12) est logé par la deuxième rainure (28) du corps de vissage (10).

6. Raccord enfichable selon l'une quelconque des revendications 1 à 5, **caractérisé en ce que** la bague de sûreté (20) est une bague de sûreté à élargissement élastique avec un diamètre intérieur ajusté au diamètre extérieur de l'élément tubulaire (13), qui peut être élargi par une zone de l'élément tubulaire (13) supportant la surface de blocage (16).

7. Raccord enfichable selon l'une quelconque des revendications 1 à 5, **caractérisé en ce que** la bague de sûreté (20) est une bague de sûreté élastiquement compressible avec un diamètre intérieur, qui permet dans la position d'enfichage de l'écrou de raccordement (12), un enfichage de l'élément tubulaire (13) y compris de la surface de blocage (16) constituée sur celui-ci et qui est qui est mis en prise en faisant tourner l'écrou de raccordement (12) avec la surface de blocage (16) constituée sur l'élément tubulaire (13).
